**Europäisches Patentamt**

**European Patent Office**

**Office européen des brevets**

(11) Publication number: **0 167 933**
**B1**

(12) **EUROPEAN PATENT SPECIFICATION**

(45) Date of publication of patent specification: **11.01.89**  (51) Int. Cl.⁴: **F 16 K 31/06**

(21) Application number: **85107930.1**

(22) Date of filing: **26.06.85**

(54) **Solenoid valve.**

| | |
|---|---|
| (30) Priority: **11.07.84 US 629955** | (73) Proprietor: **Sealed Power Corporation**<br>**100, Terrace Plaza**<br>**Muskegon Michigan 49443 (US)** |
| (43) Date of publication of application:<br>**15.01.86 Bulletin 86/03** | (72) Inventor: **Mullally, Charles J.**<br>**2925 Scenic Drive**<br>**Muskegon Michigan 49445 (US)** |
| (45) Publication of the grant of the patent:<br>**11.01.89 Bulletin 89/02** | |
| (84) Designated Contracting States:<br>**DE FR GB IT** | (74) Representative: **Blumbach Weser Bergen**<br>**Kramer Zwirner Hoffmann Patentanwälte**<br>**Sonnenbergerstrasse 43**<br>**D-6200 Wiesbaden 1 (DE)** |
| (56) References cited:<br>**DD-A- 101 215**<br>**DE-A-2 315 853**<br>**DE-A-2 337 886**<br>**DE-A-2 923 648**<br>**DE-B-2 221 929**<br>**DE-U-7 929 196**<br>**DE-U-8 215 342**<br>**GB-A-2 088 251**<br>**US-A-3 828 818** | |

Courier Press, Leamington Spa, England.

## Description

This invention relates to a normally closed three way solenoid valve, especially for hydraulic fluid and is a further development of EP application 84 110 318.7, published 6.11.1985 under no. 0 160 120. Such valves are utilized in automatic transmissions.

In a known normally open three way solenoid valve (US-A-3,828,818) partially the features a), a1), a2), a3), b), b1), b3), d), e) of present claim 1 are already known. Furthermore, DE-U-7,929,196 shows a plurality of circumferentially spaced passages leading from the valve chamber around the ball to a service opening, and feature b2).

In a further known, normally open three way solenoid valve (DE-A-2,315,853) a separate valve member for the inlet passage and a ball as a valve member for the drain passage are provided. Inlet passage and service or outlet passage are arranged in an obtuse angle.

These devices cannot be used where the service port should be shut off when there is no current available.

In a prior art two way solenoid valve (DE-A-2,337,886) a ball is used as a valve member for a single seat between an inlet passage and a plurality of outlet passages which, by chance, are arranged at an acute angle, such angle not being mentioned in the document. The main concern is the formation of pole pieces which are quite different to the pole piece of the present application.

Solenoid valves in automatic transmissions can be controlled by a microprocessor which receives signals from sensors that sense the conditions of the vehicle, such as road speed, throttle position or engine rotational speed. Such a microprocessor delivers electric pulses for pulse width modulating the solenoid valve. For that reason, the solenoid valve should be adapted for the pulse width modulation mode, especially should be able to accurately control the outlet pressure. This means that the outlet pressure in the service port in relation to the inlet pressure should be as close as possible to the ratio of on-time to out-time in energizing the coils. This is influenced by the magnetic flux and hydraulic flow conditions at the ball. The pressure loss should be as low as possible.

A further requirement is that the solenoid valve should be as small as possible in relation to the fluid rate controlled.

The objective of the present invention therefore is to provide a normally closed three-way solenoid valve of the kind referred to which is small and can produce the desired control of pressure and flow in the service or outlet port with a very low pressure loss.

In accordance with the invention the valve comprises a valve housing including a transverse wall, an extension having an axial opening therein and passage means in said housing leading into a valve chamber, a pole member including a pole piece extending axially inwardly of the housing and efining a first conical seat and having an axial opening therethrough which is aligned with the opening and a second transverse wall extending radially outwardly, an insert of non-magnetic material positioned in the axial opening of the extension and having an axial opening therein and defining a second seat, a coil assembly arranged in said housing between said first and second transverse wall and said pole piece, said valve chamber is arranged between said first and second seats and including a ball which has limited movement between said seats, spring means positioned in said axial opening of said pole piece and having a projection which extends through said narrow portion of said axial opening and said first seat to yieldingly urge the ball into engagement with the second seat, wherein said axial opening of said insert is useful as an inlet or supply port, said passage means in said housing is useful as a outlet or service port, and said axial opening in said pole piece is useful as a drain port, such that when fluid is applied to said supply port and the coil is de-energized, said spring means holds the ball against the second seat and prevents flow through said supply port while permitting communication between said service port and said drain port, and when the solenoid is energized, the ball is drawn toward the first seat to cloase communication to said drain port and permit flow from said supply port past the second seat to said service port, said service port includes a plurality of circumferentially spaced passages spaced from said insert and extending from adjacent the periphery of the ball at an acute angle to the axial opening in the insert to the periphery of the axial extension.

The extension of the transverse wall of the valve housing makes it possible to arrange a plurality of passages around and in an acute angle to the central passage which is the inlet, and to promote a larger fluid rate through such passages than in the mentioned three way solenoid valve, because the passages can be made wider, since the diameter of neither passageway is restricted by the diameter of the other passageway, and the flow redirection is made less power consumptive.

Further developments of the invention are included in the further claims. An embodiment of the invention will be described together with the drawings, wherein

Fig. 1 is a sectional view of a solenoid valve along the main axis,

Fig. 2 is a sectional view taken along the line 2-2 in Fig. 1,

Fig. 3 is a sectional view through a manifold portion of a typical transmission and a side-view onto the solenoid valve of invention.

The solenoid valve embodying the invention is preferably used in a pulse width modulated mode with a control system wherein a microprocessor receives signals from sensors that monitor functions such as road speed, throttle position and engine rpm and provides signals to the microprocessor which, in turn controls solenoid valves which are modulated and function as pilot valves to control pilot operated spool valves or function as control valves acting directly on hydraulic components in the transmission such as a clutch. The solenoid valve may also be used without pulse width modulation as a steady state on-off type valve.

The solenoid valve embodying the invention comprises a housing 10 that includes a transverse wall 11 having an axial extension 12 and an integral peripheral wall 13. The valve further includes a pole member 14 having an axial pole piece 15 and a transverse wall or end flange 16 extending to the peripheral wall 13 and connected thereto preferably by bending the edge 13a of the wall 13 over the periphery of the wall 16. Alternatively transverse wall 16 would be connected to peripheral wall 13 by welding at edge 13a.

Pole piece 15 is provided with an axial opening 17 and a first conical valve seat 18 at its lower end. The end for pole piece 15 is tapered. The axial extension 12 is provided with an opening 19 which extends through transverse wall 11 and has grooves 23 along the periphery of its inner end. An insert 20 is installed in opening 19 and secured in position by a suitable means such as press fit, welding or pinning. Insert 20 has an axial opening 34 and defines a second conical valve seat 21 at one end. The space between the pole piece 15 and the insert 20 is a valve chamber wherein a ball 22 is interposed between the seats 18, 21 and has limited movement therebetween. The axial grooves 23 in wall 11 and extension 12 adjacent the seat 21 facilitate flow about the ball 22. As shown the major portion of the ball 22 lies within the transverse wall 11 of the housing.

Spring means in the form of a compression spring 24 and a projecting end 25 is interposed in the opening 17 and held between a press fitted and welding roll pin 26 having an exhaust opening 26a and a narrow portion of the opening 17 to yieldingly urge the ball 22 toward the second seat 21.

The housing 10 and pole piece 15 define an annular cavity 27 in which a coil assembly including a coil holder 28 and an annular coil 29 are positioned.

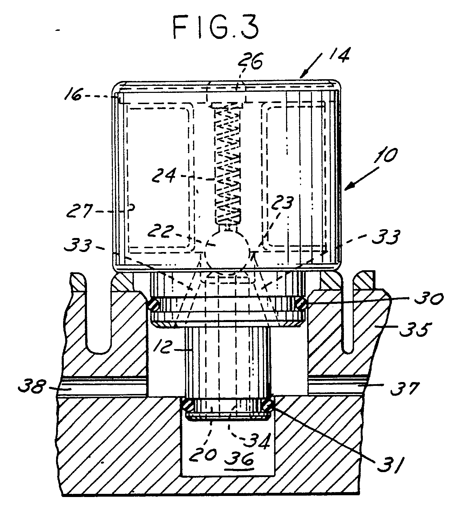

A plurality of circumferentially spaced outlet passages 33 extend at an acute angle to the axial opening 34 from adjacent the periphery of the ball 22 through the axial extension 12 to the periphery thereof. O-rings 30, 31 about the extension 12 are used for sealingly inserting the valve in an appropriate place as shown in Figure 3.

Referring to Figure 3, the valve is shown as mounted in a typical transmission manifold 35 having an inlet or supply passage 36 and outlet or service channels 37, 38 that direct fluid from the solenoid valve to clutches or spool valves as the case may be.

When the coil 29 is de-energized, the spring 24 urges the ball 22 against the second seat 21, so there will be no flow from the inlet passage 34 through the outlet passages 33. However, there will be free communication between the passages 33, grooves 23 about the ball 22 past first seat 18 and through the passages 17 and the exhaust opening 26a to the exterior which is normally connected to a sump or drain. In the normally closed position of the valve, the service channels 37, 38 therefore are connected as return lines.

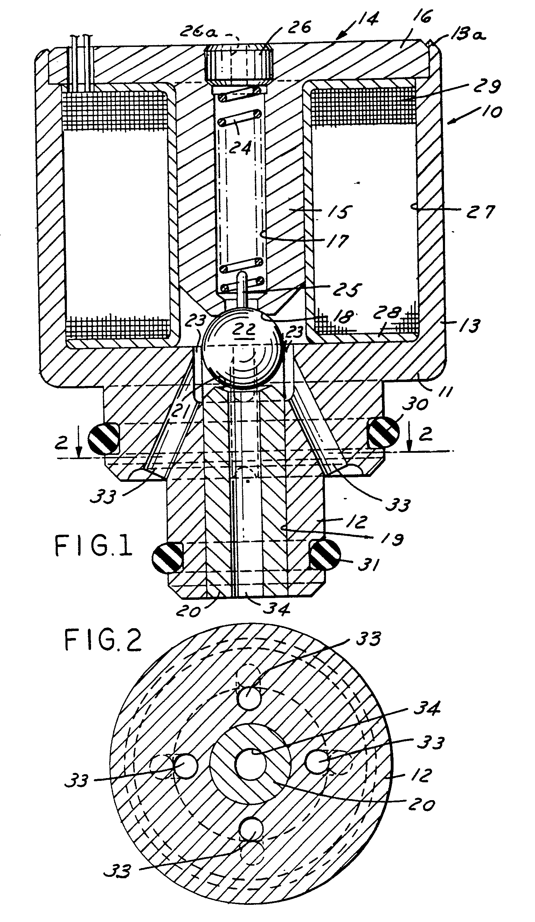

When the coil 29 is energized, the flux induced by the coil 29 will follow a path through the pole piece 15 into the wall 16, through the peripheral wall 13 and the transverse wall 11, across the air gap between the wall 11 and the ball 22, through the ball 22 and across the diminishing air gap between the ball 22 and the pole piece 15 into the pole piece 15. It should be noted that the seat 21 and, in this case, the entire insert 20 is non-magnetic and thus carries no applicable magnetic flux. The ball 22 is drawn upwardly as shown in Fig. 1 against the first seat 18 so that fluid can flow from the inlet passage 34 past the ball 22 and second seat 21 and through the outlet passages 33 to the service channels 37, 38. Fluid is prevented from flowing out of the exhaust opening 17, 26a by seating the ball 22 against the seat 18.

Materials for the flux carrying components are normally low carbon mild steels or sintered irons while the non-magnetic seat material is normally an austenitic stainless steel for durability, but could be any non-magnetic material.

Since this is a normally closed valve, in the unenergized state the ball must seal off the inlet pressure through the biasing force of the spring. Generally a "pop off" or "start leak" pressure is specified by the end user of the valve: Calibration for "pop off" pressure is made by applying this pressure to the inlet side of the ball either by actual fluid pressure or by mechanical force and adjusting the spring by pushing the roll pin 26 against the spring until the ball just seals off the inlet. The roll pin is then either welded or mechanically staked in place to maintain the calibration.

A clearance of 0,076 to 0,254 mm preferably is maintained between the ball 22 and opening 19 to minimize the air gap between them so as to optimize the magnetic circuit to minimize power requirements. Since the clearance is so small, the grooves 23 are necessary to allow the fluid to flow around the ball 22 and out the exhaust port 26a without undue restriction, and to minimize the hydraulic forces acting on the ball. The clearance between ball 22, when it engages one seat, and the other seat ranges between 0,076 to 0,508 mm.

Use of the ball 22 as both a sealing member and as the armature are basically required to obtain the desired performance from the small package size required.

The lead wires from the coil 29 pass through the end flange 16 and are then attached to a standard quick connector that also receives the wires from the microprocessor.

In a pulse width modulated mode, controlled output pressure is obtained through modulation of the "on" to "off" time during each cycle at any given frequency. The valves have been used at operational frequencies of from 30 to 100 hertz but higher or lower frequencies could be used.

The operating frequency is normally constant with the amount of "on" time being varied within the cycle to give the proper output pressure. Theoretically, the output pressure would be zero, when the valve is "off", and would be input pressure, when the valve is "on"; however, due to friction, inertia and elasticity in the hydraulic circuit, the output pressure tends to effectively average somewhere between zero and input depending on the ration of "on" to "off" time.

In a typical example, the coil is energized at a frequency of 100 hertz (cycles per second) which allows 10 ms of operation time for each cycle. The outlet pressure is varied by maintaining the duration of the energizing signal within the 10 ms time frame. The longer the signal is applied, the closer the average outlet pressure is to the inlet pressure. Ideally, the ratio of pressure out to pressure in is a straight line function of the ratio of energized time to available cycle time, that is, at an "on" time of 3 ms (or 30% of 10 ms available), the output pressure would be 30% of the input pressure. In actual practice, it takes about approximately 1.6 ms of on time to unseat the ball. This lag is due to the time required to build sufficient magnetic force to overcome the spring force and ball inertia; likewise, it takes approximately 1.5 ms for the ball to return to the normally closed position once the coil current is shut off. This device is able to accurately regulate oil output pressure at 20 - 100% of input pressure.

Although the valve shown is particularly designed for use in a pulse width modulated mode, it can also be utilized in an on-off or steady state directional mode.

It can be seen that by providing a plurality of passageways 33 in the housing 10 at an acute angle to axial inlet opening 34, the inlet opening 34 can be made larger in diameter than when the outlet passages 33 are formed in the insert 20 and are parallel to the inlet opening 34 thereby limiting the diameter of the inlet opening. As a result it is possible to obtain a greater volume of flow at the desired pressure.

## Claims

1. A normally closed three way solenoid valve, especially for hydraulic fluid, comprising
   a) a valve housing (10) including
   a1) a first transverse wall (11),
   a2) an extension (12) having an axial opening (19) therein and
   a3) passage means (33) in said housing (10) leading into a valve chamber,
   b) a pole member (14) including
   b1) a pole piece (15) extending axially inwardly of the housing and defining a first conical seat (18) at its end,
   b2) said pole piece (15) having an axial opening (17) therethrough which is aligned with said opening (19) in the extension (12) and has a narrow portion at said first seat (18),
   b3) a second transverse wall (16) extending radially outwardly,
   c) an insert (20) of non-magnetic material positioned in the axial opening (19) of the extension (12) and having
   c1) an axial opening (34) therein and
   c2) defining a second seat (21),
   d) a coil assembly (28, 29) arranged in said housing (10) between said first and second transverse walls (11, 16) and said pole piece (15),
   e) a ball (22) arranged in said valve chamber between said first and second seats (18, 21) and having limited movement therebetween,
   f) spring means (24, 25) positioned in said axial opening (17) of said pole piece (15) and having a projection (25) which extends through said narrow portion of said axial opening (17) and said first seat (18) to yieldingly urge the ball (22) into engagement with the second seat (21);
   g) wherein said axial opening (34) of said insert (20) is useful as an inlet or supply port, said passage means (33) in said housing is useful as a outlet or service port, and said axial opening (17) in said pole piece (15) is useful as a drain port, such that when fluid is applied to said supply port (34) and the coil (28, 29) is de-energized, said spring means (24, 25) holds the ball (22) against the second seat (21) and prevents flow through said supply port (34) while permitting communication between said service port (33) and said drain port (17), and when the solenoid is energized, the ball (22) is drawn toward the first seat (18) to close communication to said drain port (17) and permit flow from said supply port (34) past the second seat (21) to said service port (33)
   characterized in that
   h) said service port includes a plurality of circumferentially spaced passages (33) spaced from said insert (20) and extending from adjacent the periphery of the ball (22) at an acute angle to the axial opening (34) in the insert (20) to the periphery of the axial extension (12).

2. The solenoid valve set forth in claim 1 wherein the exterior of said axial extension (12) carries spaced annular seals (30, 31) and the outer ends of said circumferentially spaced passages (33) terminate at points axially between said seals (30, 31).

3. The solenoid valve set forth in claim 1 or 2 wherein said extension (12) is extending axially from said transverse wall (11), a peripheral wall (13) is extending axially from the periphery of the transverse wall (11) in a direction opposite to the direction in which the axial extension (12) extends, and said pole member (14) which includes said pole piece (15) has a transverse wall (16) extending radially outwardly into engagement with the peripheral wall (13) and connected thereto.

4. The solenoid valve set forth in any of claims 1 to 3 including a manifold (35) having an inlet manifold passage (36) and an outlet channel (37, 38), said axial extension (12) of said valve extending into said manifold (35) such that the intake manifold passage (36) communicates with said axial opening (34) in said axial extension (12) and said outlet channel (37, 38) communicates with said circumferentially spaced passages (33).

## Patentansprüche

1. Normalerweise geschlossenes Dreiwege-Magnetventil, insbesondere für Hydraulikflüssigkeit, mit folgenden Merkmalen:

a) ein Ventilgehäuse (10) umfaßt

a1) eine erste Querwand (11),

a2) einen Fortsatz (12) mit darin angebrachter axialer Öffnung (19) und

a3) Kanaleinrichtungen (33) in dem Gehäuse (10), welche in eine Ventilkammer führen;

b) ein Polglied (14) umfaßt

b1) ein Polstück (15), welches sich axial einwärts im Gehäuse erstreckt und an seinem Ende einen ersten konischen Sitz (18) bildet;

b2) das Polstück (15) besitzt eine durchgehende axiale Öffnung (17), welche zu der Öffnung (19) in dem Fortsatz (12) ausgerichtet ist und bei dem Sitz (18) eine Verengungsstelle aufweist;

b3) eine zweite Querwand (16) erstreckt sich radial nach außen;

c) ein Einsatz (20) aus nicht magnetischem Material ist in der axialen Öffnung (19) des Fortsatzes (12) angeordnet und besitzt

c1) eine axiale Öffnung (34) und

c2) bestimmt einen zweiten Sitz (21);

d) eine Spulenanordnung (28, 29) ist in dem Gehäuse (10) zwischen den ersten und zweiten Querwänden (11, 16) und dem Polstück (15) untergebracht;

e) eine Kugel (22) ist in der Ventilkammer zwischen dem ersten und zweiten Sitz (18, 21) angeordnet und ist dazwischen beschränkt verschieblich;

f) eine Federeinrichtung (24, 25) ist in der axialen Öffnung (17) des Polstückes (15) angeordnet und weist einen Vorsprung (25) auf, der sich durch die Verengungsstelle der axialen Öffnung (17) und den ersten Sitz (18) erstreckt, um die Kugel (22) in Anlage an den zweiten Sitz (21) zu drängen;

g) die axiale Öffnung (34) in dem Einsatz (20) ist als Einlaß oder Zufuhranschluß dienlich; die Kanaleinrichtung (33) in dem Gehäuse ist als Auslaß oder Arbeitsanschluß dienlich, und die axiale Öffnung (17) in dem Polstück (15) ist als Rücklaufanschluß dienlich, so daß, wenn dem Zuführanschluß (34) Fluid zugeführt wird und die Spule (28, 29) entregt ist, die Federeinrichtung (24, 25) die Kugel (22) gegen den zweiten Sitz (21) hält und den Strom durch den Zuführanschluß (34) verhindert, während eine Verbindung zwischen dem Arbeitsanschluß (33) und dem Rücklaufanschluß (17) gegeben ist, und, wenn der Magnet erregt ist, die Kugel (22) zum ersten Sitz (18) gezogen wird, um die Verbindung zu dem Rücklaufanschluß (17) zu unterbrechen und einen Strom zwischen dem Zuführanschluß (34) und dem Arbeitsanschluß (33) am zweiten Sitz (21) zu ermöglichen,

dadurch gekennzeichnet, daß

h) der Arbeitsanschluß eine Mehrzahl von in Umfangsrichtung im Abstand voneinander angeordneten Kanälen (33) aufweist, die einen Abstand von dem Einsatz (20) haben und von der Nachbarschaft des Kugelumfangs (22) im spitzen Winkel zur axialen Öffnung (34) in dem Einsatz (20) sich zum Rand des axialen Fortsatzes (12) erstrecken.

2. Magnetventil nach Anspruch 1, dadurch gekennzeichnet, daß das Äußere des axialen Fortsatzes (12) im Abstand voneinander ringförmige Dichtungen (30, 31) trägt und daß die äußeren Enden der in Umfangsrichtung im Abstand voneinander angeordneten Kanäle (33) an Stellen enden, die axial zwischen den Dichtungen (30, 31) liegen.

3. Magnetventil nach Anspruch 1 oder 2, dadurch gekennzeichnet, daß der Fortsatz (12) sich axial von der Querwand (11) erstreckt, daß eine Umfangswand (13) sich axial vom Rand der Querwand (11) in Richtung entgegengesetzt zur Richtung der axialen Erstreckung des Fortsatzes (12) erstreckt, und daß das Polglied (14), welches das Polstück (15) einschließt, eine Querwand (16) aufweist, die sich radial auswärts in Berührung mit der Umfangswand (13) erstreckt und mit dieser verbunden ist.

4. Magnetventil nach einem der Ansprüche 1 bis 3, dadurch gekennzeichnet, daß ein Verteiler (35) mit einem Einlaßverteilerkanal (36) und einem Auslaßkanal (37, 38) vorgesehen ist und daß der axiale Fortsatz (12) des Ventils in den Verteiler (35) hineinreicht, so daß der Einlaßverteilerkanal (36) mit der axialen Öffnung (34) in dem axialen Fortsatz (12) in Verbindung steht und der Auslaßkanal (37, 38) mit den in Umfangsrichtung im Abstand voneinander angeordneten Kanälen (33) kommuniziert.

## Revendications

1. Vanne électromagnétique à trois voies normalement fermées, spécialement conçue pour les fluides hydrauliques, comprenant:

a) un corps de vanne (10) comportant:

a1) une première paroi transversale (11),

a2) un prolongement (12) traversé par une ouverture axiale (19) et

a3) des orifices de passage (33) dans ledit corps (10) conduisant à une chambre de vanne,

b) un élément polaire (14) comportant:

b1) une pièce polaire (15) s'étendant dans le sens de l'axe à l'intérieur du corps et formant un premier siège conique (18) à son extrémité,

b2) ladite pièce polaire (15) comporte un orifice central (17) qui est aligné avec ladite ouverture (19) dans le prolongement (12) et munie d'une partie étroite au droit du dit premier siège (18),

b3) une seconde paroi transversale (16) s'étendant radialement vers l'extérieur,

c) un insert (20) composé d'un matériau non magnétique disposé dans l'ouverture axiale (19) du prolongement (12):

c1) pourvue d'une ouverture centrale (34) et

c2) constituant un second siège (21),

d) une bobine (28, 29) disposée dans ledit corps (10) entre la première et la seconde paroi transversale (11, 16) et la pièce polaire (15),

e) une bille (22) placée dans la chambre de vanne entre le premier et le second siège (18, 21) et dont le débattement est limité,

f) un ressort (24, 25) disposé dans l'ouverture axiale (17) de la pièce polaire (15) et possédant un embout (25) qui s'étend à travers la partie étroite de l'orifice central (17) et le premier siège (18) pour forcer élastiquement la bille (22) à entrer en contact avec le second siège (21),

g) vanne dans laquelle l'ouverture centrale (34) de l'insert (20) fait fonction d'entrée ou d'orifice d'alimentation, les orifices (33) dans le corps de la vanne font fonction de sortie ou d'orifice de distribution, et l'ouverture centrale (17) dans la pièce polaire (15) fait fonction d'orifice d'évacuation, de sorte que lorsque le fluide arrive à l'orifice d'alimentation (34) et que la bobine (28, 29) n'est plus alimentée, le ressort (24, 25) maintient la bille (22) contre le second siège (21) et empêche l'écoulement du fluide à travers l'orifice d'alimentation (34) tout en permettant la communication entre l'orifice de distribution (33) et l'orifice d'évacuation (17); et lorsque l'électrovanne est excitée, la bille (22) est appliquée sur le siège (18) pour fermer la communication vers l'orifice d'évacuation (17) pour permettre l'écoulement de fluide depuis l'orifice d'alimentation (34) au-delà du second siège (21) jusqu'à l'orifice de distribution (33),

caractérisée en ce que

h) l'orifice de distribution comporte une multiplicté de passages espacés (33) disposés sur une circonférence, distants de l'insert (20) et s'étendant de la périphérie de la bille (22) selon un angle aigu par rapport à l'ouverture axiale (34) dans l'insert (20) vers la périphérie du prolongement central (12).

2. Electrovanne selon la revendication 1, caractérisée en ce que la partie extérieure du prolongement central (12) comporte des joints toriques espacés (30, 31) tandis que les extrêmités extérieures des orifices (33) débouchent entre lesdits joints (30, 31).

3. Electrovanne selon l'une quelconque des revendications 1 ou 2, caractérisée en ce que le prolongement (12) s'étend axialement à partir de la paroi transversale (11), en ce qu'une paroi périphérique (13) s'étend axialement à partir de la périphérie de la paroi transversale (11) dans une direction opposée à celle dans laquelle s'étend le prolongement central (12), et en ce qu'un organe polaire (14) qui comprend la pièce polaire (15) possède une paroi transversale (16) qui s'étend radialement vers l'extérieur pour venir en contact avec la paroi périphérique (13) à laquelle elle est reliée.

4. Electrovanne selon l'un quelconque des revendications 1 à 3 caractérisée en ce qu'elle comporte un distributeur (35) pourvu d'un orifice d'entrée (36) et d'un canal de sortie (37, 38), le prolongement central (12) de ladite vanne s'étendant à l'intérieur du distributeur (35) de sorte que l'orifice d'admission (36) communique avec l'ouverture axiale (34) dudit prolongement central (12) tandis que le canal de sortie (37, 38) communique avec les orifices (33) placés de manière espacée sur une circonférence.

FIG.1

FIG.2

# FIG.3